# EUROPÄISCHE PATENTSCHRIFT

(11) **EP 1 914 118 B1**
(45) Veröffentlichungstag und Bekanntmachung des Hinweises auf die Patenterteilung: **10.11.2010**
(21) Anmeldenummer: 07017362.0
(22) Anmeldetag: 05.09.2007
(51) Int. Cl.: B60R 1/12

(54) **Aussenrückspiegel mit Leuchtmittel**
External rear mirror with illumination device
Miroir extérieur avec moyen lumineux

(30) Priorität: 06.10.2006 DE 102006048323
(43) Veröffentlichungstag der Anmeldung: 23.04.2008
(73) Patentinhaber: SMR Patents S.à.r.l., 1653 Luxembourg (LU)
(72) Erfinder: Liesener, Alf, 73614 Schorndorf (DE)
(74) Vertreter: Rausch, Gabriele

(56) Entgegenhaltungen:
- DE-A1-102004 018 695
- DE-T5-112004 000 033
- DE-U1- 29 614 664

## Beschreibung

Die Erfindung betrifft einen Außenrückblickspiegel für Fahrzeuge nach dem Oberbegriff des Anspruches 1.

Es ist bekannt, im Spiegelkopf, gegebenenfalls auch im Spiegelfuß, Leuchtmittel unterzubringen, deren Licht durch ein Lichtfenster nach außen strahlt. Das Lichtfenster besteht in der Regel aus durchsichtigem Kunststoff, der gegebenenfalls eingefärbt sein kann.

Aus der DE 296 14 664U sind Außenrückblickspiegel bekannt, die aus unterschiedlichen Kunststoffen gefertigt werden, um Lichtfenster zu erhalten. Dabei sind die Kunststoffe auf Stoß miteinander verbunden.

Der Erfindung liegt die Aufgabe zugrunde, den gattungsgemäßen Außenrückblickspiegel so auszubilden, dass die Lichtfunktion bei einfacher Ausbildung des Außenrückblickspiegels optimal erfüllt werden kann.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel besteht zumindest ein Teil des Gehäuses des Spiegelkopfes und/oder des Gehäuses des Spiegelfußes aus wenigstens zwei Kunststoffschichten mit unterschiedlicher Lichtdurchlässigkeit. Im lichtdurchlässigen Bereich hat die Kunststoffschicht geringerer Lichtdurchlässigkeit nur eine solche Dicke, dass das vom Leuchtmittel abgestrahlte Licht in ausreichender Lichtstärke austreten kann. Die Kunststoffschicht höherer Lichtdurchlässigkeit kann als Lichtscheibe für das dahinter befindliche Lichtmittel verwendet werden. Die Kunststoffschicht geringerer Lichtdurchlässigkeit kann dazu herangezogen werden, beispielsweise dem transparenten Bereich eine Eigenfarbe zu verleihen. Sind beide Kunststoffschichten im Bereich der Lichtaustrittsfläche vorgesehen, dann ist die Kunststoffschicht geringerer Lichtdurchlässigkeit so dünn, daß das vom Leuchtmittel abgestrahlte Licht in ausreichendem Maße durch beide Kunststoffschichten nach außen treten kann. Darüber hinaus kann die in diesem Lichtdurchtrittsbereich vorgesehene zweite Kunststoffschicht geringerer Lichtdurchlässigkeit so ausgebildet sein, daß sie das Leuchtmittel nach außen verdeckt.

Besonders vorteilhaft ist es, wenn die Kunststoffschicht geringerer Lichtdurchlässigkeit mit Strukturen versehen, vorzugsweise einstückig mit ihnen ausgebildet ist. Diese Strukturen können beispielsweise Halterungs/Befestigungselemente oder Wände sein, die einen Aufnahmeraum für das Leuchtmittel begrenzen. Da die Strukturen vorteilhaft einstückig mit der Kunststoffschicht geringerer Lichtdurchlässigkeit ausgebildet sind, müssen sie nicht gesondert vorgesehen und montiert werden.

Um eine optimale Verbindung beider Kunststoffschichten zu erreichen, werden sie vorteilhafterweise im Spritzgießverfahren miteinander verbunden. Bei diesem Spritzgießverfahren können gleichzeitig auch die Strukturen gespritzt werden. Ferner ist es möglich, an der Kunststoffschicht mit der höheren Lichtdurchlässigkeit beispielsweise Optikstrukturen vorzusehen.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1 und Fig. 2: in Vorder- und Rückansicht einen erfindungsgemäßen Außenrückblickspiegel,
- Fig. 3 und Fig. 4: in Darstellungen entsprechend den Fig. 1 und 2 eine zweite Ausführungsform eines erfindungsgemäßen Außenrückblickspiegels,
- Fig. 5 und Fig. 6: in Darstellungen entsprechend den Fig. 1 und 2 eine dritte Ausführungsform eines erfindungsgemäßen Außenrückblickspiegels,
- Fig. 7: einen Schnitt durch ein nicht zur Erfindung gehörendes Gehäuse eines Spiegelkopfes eines Außenrückblickspiegels,
- Fig. 8: in einer Darstellung entsprechend Fig. 7 eine weitere Ausführungsform eines Gehäuses des Spiegelkopfes eines erfindungsgemäßen Außenrückblickspiegels,
- Fig. 9: einen Schnitt durch einen Spiegelfuß eines nicht zur Erfindung gehörenden Außenrückblickspiegels.

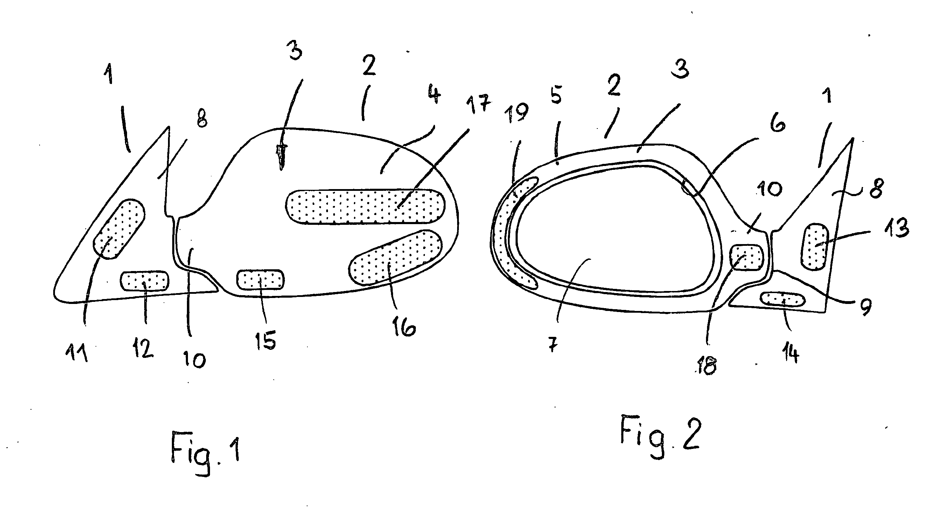

Die Fig. 1 und 2 zeigen einen Außenrückblickspiegel mit einem Spiegelfuß 1 und einem Spiegelkopf 2. Mit dem Spiegelfuß 1 wird der Außenrückblickspiegel in bekannter Weise am Kraftfahrzeug befestigt. Der Spiegelkopf 2 kann gegenüber dem Spiegelfuß 1 in und entgegen Fahrtrichtung abgeklappt werden. Hierbei kann der Spiegelkopf 2 in beiden Klapprichtungen um eine Achse schwenkbar sein (Einachsspiegel); es ist aber auch möglich, daß der Spiegelkopf 2 beim Abklappen in Fahrtrichtung nach vorn um eine andere Achse schwenkt als beim Abklappen in Fahrtrichtung nach hinten (Zweiachsspiegel). Der Spiegelkopf 2 kann darüber hinaus vorteilhaft auch in eine Parkstellung geschwenkt werden, in der er seitlich am Kraftfahrzeug anliegt.

Der Spiegelkopf 2 hat ein Gehäuse 3 mit einer vorteilhaft bauchigen Rückwand 4 und einer umlaufenden Seitenwand 5. Sie begrenzt eine Öffnung 6, in der sich ein Spiegelglas 7 befindet. Es ist vorteilhaft motorisch einstellbar, wofür im Gehäuse 3 ein entsprechender motorischer Antrieb untergebracht ist. Das Spiegelglas 7 sitzt auf einem (nicht dargestellten) Spiegelglasträger, der mittels des Antriebes in die gewünschte Richtung geschwenkt werden kann. Das Spiegelglas 7 kann vorteilhaft ein EC-Glas sein.

Im Gehäuse 3 können weitere Bauteile, wie Sensoren zum Abblenden des EC-Spiegelglases, Lautsprecher, Kameras, Leuchtmittel und dergleichen untergebracht sein.

Der Spiegelfuß 1 hat ein Gehäuse 8, das an seiner dem Spiegelkopf 2 zugewandten Seite mit einem Aufnahmeraum 9 versehen ist, in den das Spiegelkopfgehäuse 3 mit einem entsprechenden Ansatz 10 ragt. Die Umrißform des Gehäuseansatzes 10 ist an die Umrißform des Aufnahmeraumes 9 angepaßt, so daß ein kontinuierlicher Übergang in diesem Bereich zwischen dem Spiegelfuß 1 und dem Spiegelkopf 2 erreicht wird.

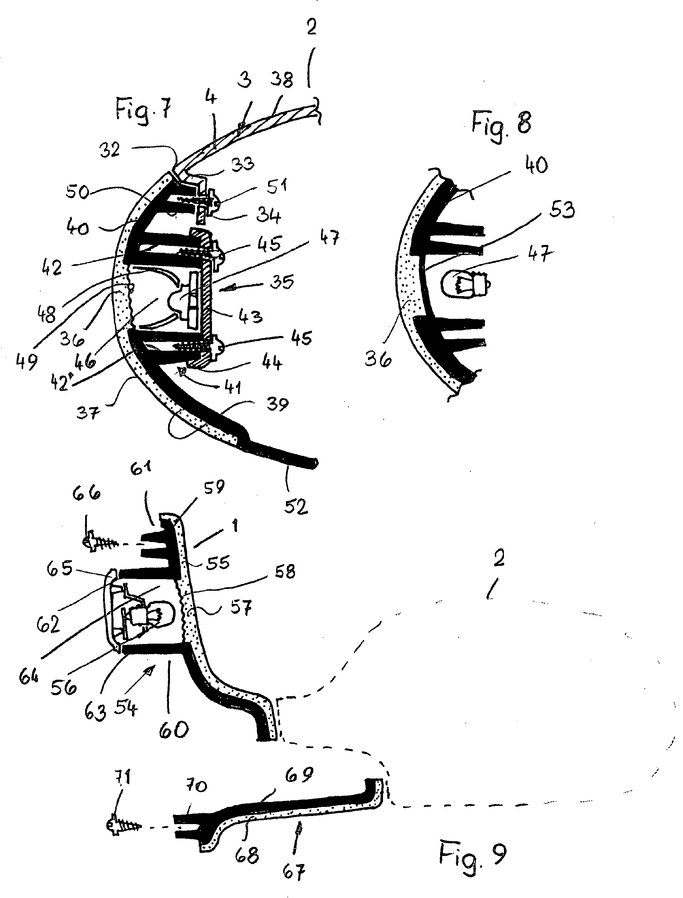

Das Gehäuse 8 des Spiegelfußes 1 ist im Ausführungsbeispiel an seiner Vorder- und an seiner Rückseite mit transparenten Bereichen 11 bis 14 versehen, hinter denen sich Lichtquellen befinden, deren Lichtstrahlen durch die transparenten Bereiche nach außen gelangen können. Die übrigen Bereiche des Gehäuses 8 haben vollständig oder teilweise einen zweischichtigen Aufbau, der anhand der Fig. 7 bis 9 noch im einzelnen beschrieben werden wird.

Auch das Gehäuse 3 des Spiegelkopfes 2 ist an seiner Vorder- und an seiner Rückseite mit transparenten Bereichen 15 bis 19 versehen, hinter denen sich ebenfalls Lichtquellen befinden, deren Licht durch die Bereiche 15 bis 19 nach außen gelangt. Die übrigen Bereiche des Gehäuses 3 können ebenfalls vollständig oder teilweise einen zweischichtigen Aufbau haben.

Die Form und/oder Anordnung der transparenten Bereiche 11 bis 14, 15 bis 19 richtet sich nach dem vorgesehenen Einsatzfall der Leuchtmittel. So kann beispielsweise der transparente Bereich 17 Teil einer Wiederholblinkleuchte sein. Die transparenten Bereiche können auch Teil von Umfeldleuchten sein, mit denen der Bereich um das Fahrzeug herum, insbesondere der Bodenbereich, beleuchtet werden kann. Die Größe der transparenten Bereiche 11 bis 14, 15 bis 19 richtet sich ebenfalls nach dem gewünschten Einsatzfall. Auch die Leuchtstärke der den transparenten Bereichen zugeordneten Leuchtmittel wird an den jeweiligen Einsatzfall angepaßt.

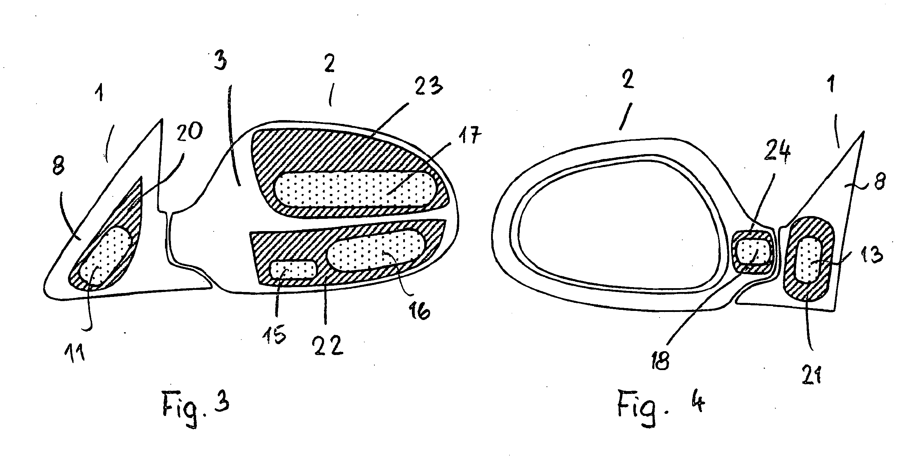

Die Fig. 3 und 4 zeigen einen Außenrückblickspiegel mit Spiegelfuß 1 und Spiegelkopf 2. Das Gehäuse 8 des Spiegelfußes 1 ist an seiner Vorder- und seiner Rückseite mit den transparenten Bereichen 11 und 13 versehen. Außerdem ist das Spiegelfußgehäuse 8 an seiner Vorder- und seiner Rückseite mit jeweils einem transparenten Bereich 20, 21 versehen, die die transparenten Bereiche 11 und 13 umgeben. Diese Bereiche sind Teil von Gehäuseteilen innerhalb des Spiegelfußes, was noch erläutert werden wird.

Das Gehäuse 3 des Spiegelkopfes 2 ist an seiner Vorder- und seiner Rückseite ebenfalls mit solchen transparenten Bereichen 22, 23 und 24 versehen. Sie sind ebenfalls Bestandteil von Gehäuseteilen, die innerhalb des Spiegelkopfgehäuses 3 liegen. Der transparente Bereich 22 umgibt die beiden transparenten Bereiche 15 und 16, der Bereich 23 den transparenten Bereich 17 und der Bereich 24 den transparenten Bereich 18. Die Umrißform und die Größe der transparenten Bereiche 20, 21 und 22, bis 24 richten sich nach dem jeweiligen Einsatzfall.

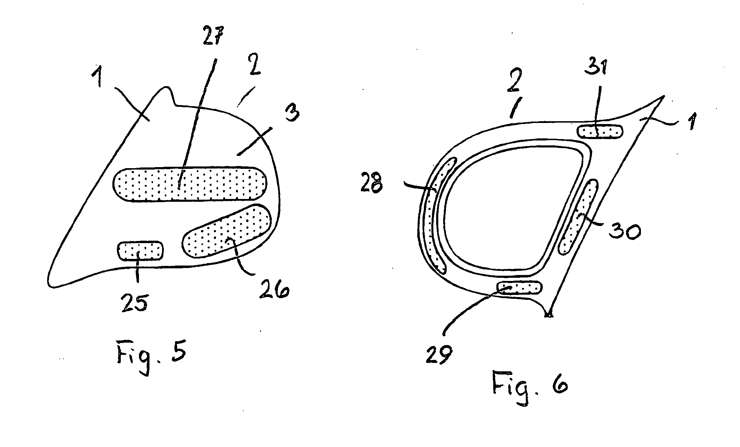

Die Fig. 5 und 6 zeigen, daß solche transparenten Bereiche auch an einteiligen Außenrückblickspiegeln vorgesehen sein können, die keinen abklappbaren Spiegelkopf aufweisen. Der Außenrückblickspiegel nach den Fig. 5 und 6 hat den Spiegelkopf 2, der einstückig mit dem Spiegelfuß 1 ausgebildet ist. Das Gehäuse 3 des Spiegelkopfes 2 ist an seiner Vorder- und an seiner Rückseite mit transparenten Bereichen 25 bis 31 versehen, hinter denen sich in noch zu beschreibender Weise Lichtquellen befinden, die ihr Licht durch diese Bereiche nach außen abstrahlen.

Die in den Fig. 1 bis 6 dargestellten transparenten Bereiche 11 bis 31 sind nur als Beispiele zu verstehen. Diese Bereiche können auf unterschiedlichste Weise verteilt am Spiegelfuß 1 und/oder am Spiegelkopf 2 vorgesehen sein, wobei die Größe, Umrißform und Erstreckung an den Einsatzfall des jeweiligen Außenrückblickspiegels einfach angepaßt werden kann. Fig. 7 zeigt die Rückwand 4 des Spiegelkopfgehäuses 3 eines nicht zur Erfindung gehörenden Beispiels. Die Rückwand 4 hat eine Öffnung 32, deren Rand 33 nach innen gerichtet ist. Das freie Ende des Randes 34 ist abgewinkelt und dient zur Befestigung einer Leuchteneinheit 35, die in die Öffnung 32 der Rückwand 4 eingesetzt ist. Die Leuchteneinheit 35 hat eine transparente Scheibe 36, die in der Einbaulage der Leuchteneinheit 35 mit ihrer Außenseite 37 eine stetige Fortsetzung der Außenseite 38 des Gehäuses 3 bildet. Die Scheibe 36 besteht aus farblosem oder auch getöntem Kunststoff, vorzugsweise spritzgußfähigem Kunststoff. Auf seine Rück- bzw. Innenseite 39 ist eine zweite Schicht 40 aufgebracht, vorzugsweise aufgespritzt. Diese Schicht 40 kann transparent und getönt, aber auch opak sein. Die Schicht 40 ist Bestandteil eines Halterungs/Befestigungselementes 41, das einstückig mit der Schicht 40 ausgebildet ist. Das Element 41 hat von der Schicht 40 aus nach innen ragende, parallel zueinander liegende Wände 42, 42', auf die stirnseitig ein Deckel 43 aufgesetzt ist. Er hat einen umlaufenden, in Richtung auf die Schicht 40 ragenden Rand 44, mit dem er die Wände 42, 42' umgibt. Der Deckel 43 wird mit Schrauben 45 gehalten, die stirnseitig in die Wände 42, 42' geschraubt werden.

Die Wände 42, 42' begrenzen einen Aufnahmeraum 46 für wenigstens ein Leuchtmittel 47, vorzugsweise eine LED. Je nach Ausbildung des Aufnahmeraumes 46 können mehrere Leuchtmittel 47 vorgesehen sein. Sie können je nach Umrißform des Aufnahmeraumes 46 unterschiedlich verteilt angeordnet sein. Das von den LEDs 47 ausgesandte Licht gelangt zwischen den Wänden 42, 42' durch die Scheibe 36 nach außen.

In diesem Beispiel ist dem Leuchtmittel 47 ein Reflektor 48 zugeordnet, der die Lichtausbeute erhöht, indem er die quer vom Leuchtmittel 47 abgehenden Strahlen in Richtung auf die Lichtscheibe 36 reflektiert. Je nach Leuchtungsanforderung kann der Reflektor 48 auch entfallen.

Es ist möglich, wie beispielhaft in Fig. 7 dargestellt ist, an der Innenseite der Scheibe 36 im Lichtaustrittsbereich eine Optik 49 vorzusehen, die vorteilhaft einstückig mit der Scheibe 36 ausgebildet ist. Die Optik 49 kann so ausgebildet sein, daß sie das Licht umlenkt, streut oder auch als Lichtleiter wirkt.

Die Schicht 40 ist einstückig mit einem Halterungs/Befestigungselement 50 versehen, das quer von der Schicht 40 nach innen absteht und in das Schrauben 51 geschraubt werden, mit denen die gesamte Leuchteneinheit 35 am freien Ende 34 des Randes 33 des Gehäuses 4 befestigt wird.

Die Scheibe 36 besteht aus durchsichtigem, vorzugsweise farblosem Kunststoff. Die an ihrer Rückseite aufgebrachte Schicht 40 besteht beispielsweise aus opakem Kunststoff. Die Schicht 40 bedeckt die Rückseite der Schicht 36 bis auf den Bereich der Optik 49 vollständig. Somit ist nur der zentrale Bereich der Scheibe 36 lichtdurchlässig, so daß das vom Leuchtmittel 47 ausgesandte Licht nach außen treten kann.

Die Schicht 40 ist so vorgesehen, daß sie wenigstens längs eines Randes die Lichtscheibe 36 überragt. In diesem Falle ist die Schicht 40 so weit nach außen gezogen, daß ihre Außenseite 52 eine stetige Fortsetzung der Außenseite 37 der Lichtscheibe 36 bildet. An diesem überstehenden Teil der Schicht 40 kann wenigstens ein weiteres (nicht dargestelltes) Halterungs-/Befestigungselement vorgesehen sein, um auch in diesem Bereich die Leuchteneinheit 35 am Rand 33 der Öffnung 32 befestigen zu können.

Die Lichtscheibe 36 bildet in ihrem lichtdurchlässigen Bereich die in den Fig. 1 bis 4 beispielhaft angegebenen transparenten Bereiche 15 bis 19 und 25 bis 31. Der über die Lichtscheibe 36 überstehende Teil der Schicht 40 bildet die in den Fig. 3 und 4 dargestellten Bereiche 22 bis 24. In diesem Beispiel hat die Schicht 40 etwa gleiche Dicke wie die die Lichtscheibe 36 bildende Schicht. Die innere Schicht 40 hat einen geringeren Transmissionsgrad als die äußere Schicht 36. Im Bereich des Leuchtmittels 47 dient die transparentere Scheibe 36 als Lichtscheibe für das dahinter liegende Leuchtmittel 47, während die innere Schicht 40 im wesentlichen dazu dient, der Lichtscheibe 36 einen eigenen Farbton zu verleihen. Die Schicht 40 ist im Bereich des Leuchtmittels 47 unterbrochen, so daß das vom Leuchtmittel ausgesandte Licht optimal nach außen gelangen kann.

Ist die äußere Schicht 36 transparent und farblos, dann kann durch Einfärbung der Schicht 40 dem transparenten Bereich ein gewünschter Farbton verliehen werden. An der inneren Schicht 40 sind in der beispielhaft beschriebenen Weise Strukturen angeformt, die zur Aufnahme der Leuchtmittel, elektrischer Komponenten oder von Abdeckkappen, zur Verbindung mit anderen Komponenten, wie Spiegelverstellantrieben oder Kabeln, dienen.

Die äußere Schicht 36 kann auch größere Bereiche oder gar die komplette Oberseite des Gehäuses 4 überziehen. Dabei kann diese Schicht 36 farblos oder auch eingefärbt sein. Die Schicht 36 und die Schicht 40 können zusammen besonders vorteilhaft das Gehäuse 3 des Spiegelkopfes 2 bilden. Dann ist die Schicht 40 nur in den Bereichen nicht vorgesehen, in denen das vom Leuchtmittel 47 abgestrahlte Licht nach außen gelangen soll. In diesen Bereichen kann die Schicht 40 aber auch so dünn sein, daß das abgestrahlte Licht mit ausreichender Helligkeit beide Schichten 36, 40 durchdringen kann.

Auch die transparenten Bereiche 11 bis 13 des Spiegelfußes 1 sind in ähnlicher Weise ausgebildet.

Bei der erfindungsgemäßen Ausführungsform nach Fig. 8 ist der Bereich der Lichtscheibe 36, durch den das vom Leuchtmittel 47 abgestrahlte Licht nach außen tritt, innenseitig durch einen sehr dünnen Bereich 53 der Schicht 40 bedeckt. Der Überzug 53 ist so dünn, daß das vom Leuchtmittel 47 abgestrahlte Licht in der erforderlichen Lichtstärke nach außen treten kann. Im übrigen kann die Schicht 40 gleich ausgebildet und vorgesehen sein wie bei der Ausführungsform nach Fig. 7. Dem Leuchtmittel 47 ist bei dieser Ausführungsform ein Reflektor nicht zugeordnet. Zudem ist das Leuchtmittel 47 eine Glühlampe. Sie kann selbstverständlich auch eine LED entsprechend der vorigen Ausführungsform sein.

Fig. 9 zeigt beispielhaft die nicht zur Erfindung gehörende Ausbildung der transparenten Bereiche im Spiegelfuß 1. Das Gehäuse 8 des Spiegelfußes 1 (Fig. 1 und 2), das in Fig. 9 nicht dargestellt ist, hat eine Öffnung, in die eine Leuchteneinheit 54 eingesetzt ist. Sie hat eine äußere Schicht 55, die eine Lichtscheibe der Leuchteneinheit 54 bildet. Hinter ihr befindet sich wenigstens ein Leuchtmittel 56, das eine LED, eine Glühlampe und dergleichen sein kann. Je nach Größe des transparenten Bereiches können weitere Leuchtmittel hinter der Lichtscheibe 55 vorgesehen sein. Im Lichtdurchtrittsbereich 57 ist die Lichtscheibe 55 innenseitig mit einer Optik 58 versehen, die zur Lichtumlenkung, Lichtstreuung oder als Lichtleiter dienen kann. Vorteilhaft wird die Optik 58 durch eine entsprechende Struktur der Innenseite des Lichtdurchtrittsbereiches 57 gebildet. Die Optik 58 kann wie die Optik 49 (Fig. 7) beim Spritzgießvorgang in die Innenseite der Lichtscheibe eingebracht werden. Die Lichtscheibe 55 ist im Bereich außerhalb des Lichtdurchtrittsbereiches 57 von einer inneren Schicht 59 bedeckt, die im Spritzgießverfahren an die Innenseite der Lichtscheibe 55 angespritzt wird. Bis auf den Lichtdurchtrittsbereich 57 bedeckt die Schicht 59 die Innenseite der Lichtscheibe 55 vollständig.

An die Schicht 59 sind Strukturen 60, 61 angeformt. Die Struktur 60 hat zwei Wände 62, 63, die quer von der Schicht 59 nach innen abstehen und einen Aufnahmeraum 64 für das Leuchtmittel 56 begrenzen. Auf die Stirnseite der Wände 62, 63 kann ein Deckel 65 aufgesetzt und in geeigneter Weise befestigt werden, der den Aufnahmeraum 64 abdeckt.

Die Struktur 61 dient zur Halterung der Leuchteneinheit 54 am Gehäuse 8 des Spiegelfußes 1. Mit Schrauben 66 wird die Leuchteneinheit 54 über die Struktur 61 am Gehäuse 8 des Spiegelfußes 1 befestigt.

In diesem nicht zur Erfindung gehörendem Beispiel haben die Lichtscheibe 55 und die Schicht 59 vorteilhaft etwa gleiche Dicke. Beide Schichten können selbstverständlich auch unterschiedlich dick sein. Die Lichtscheibe 55 ist zumindest im Lichtdurchtrittsbereich 57 transparent und vorzugsweise farblos ausgebildet. Ebenso wie die Lichtscheibe 36 gemäß den Fig. 7 und 8 kann die Lichtscheibe 55 aber auch eingefärbt sein, wenn die Lichtquelle eine entsprechende Funktion, wie beispielsweise eine Blinkerfunktion, ausüben soll. Die Schicht 59 kann transparent, aber auch lichtundurchlässig bzw. opak ausgebildet sein. Ist die äußere Schicht 55 transparent und farblos, dann kann durch Einfärbung der inneren Schicht 59 der Leuchteneinheit 54 eine bestimmte Farbtönung gegeben werden.

Der Spiegelfuß 1 ist mit einem weiteren Funktionselement 67 versehen, das in eine Öffnung des Gehäuses 8 des Spiegelfußes 1 eingesetzt und dort befestigt wird. Das Funktionselement 67 hat die äußere Schicht 68, die innenseitig mit einer Schicht 69 überzogen ist. Die innere Schicht 69 ist einstückig mit einer Struktur 70 ausgebildet, die als Halterungs/Befestigungselement dient und in die Schrauben 71 geschraubt werden, mit denen das Funktioriselement 67 in der Öffnung des Gehäuses 8 befestigt werden kann. Die Schicht 69 bedeckt die äußere Schicht 68 innenseitig vollständig. Die äußere Schicht 68 kann aus transparentem Kunststoff bestehen, der farblos oder eingefärbt sein kann. Die innere Schicht 69 kann ebenfalls lichtdurchlässig und farblos oder eingefärbt sein.

Die äußere Schicht 55, 68 hat einen höheren Lichttransmissionsgrad als die innere Schicht 59, 69. Die Schicht 55, 68 mit dem höheren Transmissionsgrad kann auch größere Bereiche oder sogar die komplette Oberfläche des Gehäuses 8 des Spiegelfußes 1 bedecken. Wie anhand des Ausführungsbeispieles gemäß Fig. 7 beschrieben, kann das gesamte Gehäuse in vorteilhafter Weise aus den beiden Schichten 55, 59; 68, 69 bestehen. In den Lichtdurchtrittsbereichen ist die weniger transparente Schicht 59, 69 Bereichen sehr dünn, so daß sie den Lichtdurchtritt praktisch nicht beeinträchtigt.

Die Ausgestaltung der Schichten 36, 40; 55, 59; 68, 69 ist nur beispielhaft dargestellt. Die beiden durch Spritzgießen miteinander verbundenen Schichten bilden jeweils formstabile Körper, die sich dementsprechend einfach am Außenrückblickspiegel anbringen lassen. Die Formgestaltung hängt von den baulichen Gegebenheiten des Außenrückblickspiegels ab.

Die transparenten Bereiche 11 bis 31 können, wie anhand der Fig. 7 bis 9 beispielhaft beschrieben ist, aus zwei Schichten bestehen. Es ist grundsätzlich möglich, auch weitere Schichten vorzusehen. Während in den Fig. 1 bis 6 nur einzelne Bereiche 11 bis 31 mit diesem Schichtaufbau versehen sind, kann bevorzugt das gesamte Gehäuse 3, 8 den mehrschichtigen Aufbau haben. Dieser mehrschichtige Aufbau ermöglicht die fugenlose Integration von Lichtfunktionen in den Außenrückblickspiegel. Diese Lichtfunktionen können zum Beispiel eine Fahrtrichtungsanzeige, eine Bodenbeleuchtung, eine Warnanzeige, eine Positionsleuchte, eine Frontleuchte und dergleichen sein. Für die integrierten Lichtfunktionen werden keine zusätzlichen Lichtscheiben benötigt. Insbesondere können auch Fugen vermieden werden, insbesondere dann, wenn das gesamte Gehäuse den zumindest zweischichtigen Aufbau hat. Der Außenrückblickspiegel hat infolge der beschriebenen Ausbildung nur eine geringe Zahl von Bauteilen und läßt sich einfach montieren. Auch der Dichtungsaufwand für die Integration der Lichtquellen im Außenrückblickspiegel kann klein gehalten werden.

Wie beispielhaft anhand von Fig. 8 erläutert worden ist, ist der Lichtdurchtrittsbereich innenseitig mit einem dünnen Überzug versehen sein. Dann ist es möglich, durch entsprechende Farbgebung dieses inneren Überzuges den Lichtdurchtrittsbereich von außen unsichtbar zu gestalten, wenn die Lichtquelle nicht eingeschaltet ist. Wird das Leuchtmittel eingeschaltet, dann tritt durch diesen dünnen Überzug ausreichend Licht nach außen aus, so daß die gesetzlichen Anforderungen hinsichtlich der Lichtstärke erfüllt werden. Die äußere Schicht kann, wenn sie aus farblosem durchsichtigem Kunststoff besteht, als transparenter Überzug des Gehäuses 3, 8 verwendet werden. Ein solcher Überzug erzielt einen Hochglanzeffekt, so daß auf eine teure Lackierung dieses Hochglanzeffektes verzichtet werden kann.

Die Bauteile werden im Spritzgußverfahren, insbesondere im Mehrfarbspritzgußverfahren, hergestellt. Zunächst wird in der Spritzgußform die erste Schicht des zu erstellenden Bauteiles gespritzt. Bevor diese erste Schicht ausgehärtet ist, wird die zweite Schicht aufgespritzt. Dies kann in einem anderen Spritzgußwerkzeug erfolgen, aber auch im gleichen Spritzgußwerkzeug, bei dem lediglich ein anderes Formteil eingesetzt wird. Da solche Mehrfarbspritzgußverfahren bekannt sind, werden sie auch nicht näher erläutert. Mit diesem Spritzgußverfahren kann auch das gesamte Gehäuse 3, 8 des Spiegelkopfes 2 und/oder des Spiegelfußes 1 hergestellt werden, wenn es aus den beiden Schichten besteht.

## Patentansprüche

1. Aussenrückblickspiegel für Fahrzeuge mit einem Spiegelkopf (2), der mit einem Spiegelglas (7) versehen und in dem wenigstens ein Leuchtmittel (47) untergebracht ist, das Licht durch wenigstens einen lichtdurchlässigen Bereich (15 bis 31) nach aussen abstrahlt, und mit einem Spiegelfuss (1), **dadurch gekennzeichnet, dass** zumindest ein Teil des Gehäuses (3) des Spiegelkopfes (2) und/oder des Gehäuses (8) des Spiegelfusses (1) , aus wenigstens zwei Kunststoffschichten (36, 40; 55, 59; 68, 69) besteht, die eine innere und eine äußere Schicht bilden und die unterschiedliche Lichtdurchlässigkeit haben, und dass im lichfidurchlässigen Bereich (15 bis 31) die Kunststoffschicht (40, 59, 69) mit der geringeren Lichtdurchlässigkeit nur eine solche Dicke hat, dass das vom Leuchtmittel (47) abgestrahlte Licht in ausreichender Lichtstärke nach aussen abstrahlt.

2. Außenrückblickspiegel nach Anspruch 1,
**dadurch gekennzeichnet, daß** die beiden Kunststoffschichten (36, 40; 55, 59; 68, 69) durch Spritzgießen miteinander verbunden sind.

3. Außenrückblickspiegel nach einem der Anspruch 1, **dadurch gekennzeichnet, daß** die Kunststoffschicht (36, 55, 68) mit höherer Lichtdurchlässigkeit im Bereich der Lichtaustrittsfläche vorgesehen ist.

4. Außenrückblickspiegel nach Anspruch 1, **dadurch gekennzeichnet, daß** sich die Kunststoffschicht (36, 55, 68) mit höherer Lichtdurchlässigkeit über die Lichtaustrittsfläche hinaus erstreckt.

5. Außenrückblickspiegel nach Anspruch 1, **dadurch gekennzeichnet, daß** die Kunststoffschicht (40, 59, 69) geringerer Lichtdurchlässigkeit mit Strukturen (41, 50, 70) versehen ist.

6. Außenrückblickspiegel nach Anspruch 5,
**dadurch gekennzeichnet, daß** die Strukturen (41, 50, 70) einstückig mit der Kunststoffschicht (40, 59, 69) ausgebildet sind.

7. Außenrückblickspiegel nach einem der Ansprüche 5 und 6,
**dadurch gekennzeichnet, daß** die Strukturen (42, 42, 62, 63) das Leuchtmittel (47, 56) aufnehmen.

8. Außenrückblickspiegel nach Anspruch 1, **dadurch gekennzeichnet, daß** die Kunststoffschicht (40, 59, 69) geringerer Lichtdurchlässigkeit an der Rückseite der Kunststoffschicht (36, 55, 68) höherer Lichtdurchlässigkeit angeordnet ist.

9. Außenrückblickspiegel nach Anspruch 1,
**dadurch gekennzeichnet, daß** die Kunststoffschicht (36, 55) höherer Lichtdurchlässigkeit im Lichtdurchtrittsbereich (57) rückseitig mit der Kunststoffschicht (40) geringerer Lichtdurchlässigkeit mit einer solchen Dicke überzogen ist, daß das Leuchtmittel (47, 56) im ausgeschalteten Zustand von außen nicht sichtbar ist, in eingeschaltetem Zustand das vom Leuchtmittel ausgesandte Licht jedoch in ausreichendem Maße nach außen treten kann.

10. Außenrückblickspiegel nach Anspruch 1,
**dadurch gekennzeichnet, daß** die Kunststoffschicht (40, 59, 69) mit geringerer Lichtdurchlässigkeit über die Kunststoffschicht (36, 55, 68) mit höherer Lichtdurchlässigkeit übersteht.

## Claims

1. An exterior rearview mirror for vehicles, with a mirror head (2), which is provided with a mirror glass (7), and in which at least one illuminant (47), is disposed, radiating light to the outside, through at least one light permeable section (15 to 31),and preferably provided with a mirror base (1), **characterized in that** at least a part of the housing (3) of the mirror head (2) and/or of the housing (8) of the mirror base (1) is comprised of at least two plastic layers (36, 40; 55, 59; 68, 69), framing an inner and external layer and having different light permeability, and that the plastic layer (40, 59, 69) with the lower light permeability is missing in the light permeable section (15 to 31), has only such thickness, that the light radiated by the illuminant (47) radiates to the outside with sufficient light intensity.

2. An exterior rearview mirror according to claim 1, **characterized in that** the two plastic layers (36, 40; 55, 59; 68, 69) are connected amongst each other through injection molding.

3. An exterior rearview mirror according to claim 1, **characterized in that** the plastic layer (36, 55, 68) with higher light permeability is only provided in the section of the light pass-through surface.

4. An exterior rearview mirror according to claim 1, **characterized in that** the plastic layer (36, 55, 68) with higher light permeability extends beyond the light pass-through surface.

5. An exterior rearview mirror according to one of claim 1, **characterized in that** the plastic layer (40, 59, 69) with lower light permeability is provided with structures (41, 50, 70)

6. An exterior rearview mirror according to claim 5, **characterized in that** the structures (41, 50, 70) are provided integrally with the plastic layer (40, 59, 69).

7. An exterior rearview mirror according to claims 5 and 6, **characterized in that** the structures (42, 42',62, 63) receive the illuminant (47, 56).

8. An exterior rearview mirror according to claim 1, **characterized in that** the plastic layer (40, 59, 69) with lower light permeability is disposed at the backside of the plastic layer (36, 55, 68) with higher light permeability.

9. An exterior rearview mirror according to claim 1, **characterized in that** the plastic layer (36, 55) with higher light permeability in the light pass-through section (57) is disposed on the backside with a plastic layer (40) with higher light permeability with such a thickness that the illuminant (47, 56) is not visible from the outside in switched off state, in switched on state, however the light emitted by the illuminant can pass to the exterior in an sufficient manner.

10. An exterior rearview mirror according to claim, **characterized in that** the plastic layer (40, 59, 69) with lower light permeability reaches over the plastic layer (36, 55, 68) with higher light permeability.

## Revendications

1. Rétroviseur extérieur pour véhicules avec une tête de miroir (2) qui est pourvue d'une glace (7) et dans laquelle au moins un moyen lumineux (47) est logé, lequel émet de la lumière vers l'extérieur à travers au moins une zone transparente (15 à 31), et avec un pied de miroir (1), **caractérisé en ce qu'**au moins une partie du logement (3) de la tête de miroir (2) et/ou du logement (8) du pied de miroir (1) se compose d'au moins doux couches de plastique (36, 40 ; 55, 59 ; 68, 69) qui forment une couche interne et une couche externe et ont une transparence différente, et que la couche de plastique (40, 59, 69) avec la transparence la plus faible ne possède dans la zone transparente (15 à 31) qu'une épaisseur telle que la lumière émise par le moyen lumineux (47) émet vers l'extérieur avec une luminosité suffisante.

2. Rétroviseur extérieur selon la revendication 1, **caractérisé en ce que** les deux couches de plastique (36, 40 ; 55, 59 ; 68, 69) sont reliées ensemble par moulage par injection.

3. Rétroviseur extérieur selon la revendication 1, **caractérisé en ce que** la couche de plastique (36, 55, 68) est pourvue d'une transparence supérieure dans la région de la surface de sortie de la lumière.

4. Rétroviseur extérieur selon la revendication 1, **caractérisé en ce que** la couche de plastique (36, 55, 68) avec une transparence supérieure s'étend au-delà de la surface de sortie de la lumière.

5. Rétroviseur extérieur selon la revendication 1, **caractérisé en ce que** la couche de plastique (40, 59, 69) de transparence inférieure est pourvue de structures (41, 50, 70).

6. Rétroviseur extérieur selon la revendication 5, **caractérisé en ce que** les structures (41, 50, 70) sont réalisées d'une pièce avec la couche de plastique (40, 59, 69).

7. Rétroviseur extérieur selon l'une quelconque des revendications 5 et 6,
**caractérisé en ce que** les structures (42, 42, 62, 63) reçoivent le moyen lumineux (47, 56).

8. Rétroviseur extérieur selon la revendication 1, **caractérisé en ce que** la couche de plastique (40, 59, 69) de transparence inférieure est disposée sur le côté arrière de la couche de plastique (36, 55, 68) de transparence supérieure.

9. Rétroviseur extérieur selon la revendication 1, **caractérisé en ce que** la couche de plastique (36, 55) de transparence supérieure est recouverte dans la zone de passage de la lumière (57) sur son côté arrière de la couche de plastique (40) de transparence inférieure avec une épaisseur telle que le moyen lumineux (47, 56) n'est pas visible de l'extérieur à l'état éteint, mais qu'à l'état allumé, la lumière émise par le moyen lumineux peut sortir vers l'extérieur de manière suffisante.

10. Rétroviseur extérieur salon la revendication 1, **caractérisé en ce que** la couche de plastique (40, 59, 69) avec la transparence la plus faible dépasse de la couche de plastique (36, 55, 68) avec la transparence supérieure.
